# FASCICULE DE BREVET EUROPEEN

(11) **EP 2 858 809 B1**
(45) Date de publication et mention de la délivrance du brevet: **11.03.2020**
(21) Numéro de dépôt: 13727185.4
(22) Date de dépôt: 06.06.2013
(51) Int. Cl.: B29C 67/00

(54) **PROCEDE DE TRAITEMENT THERMIQUE DE POUDRES**
VERFAHREN ZUR WÄRMEBEHANDLUNG VON PULVERN
METHOD FOR HEAT-TREATING POWDERS

(30) Priorité: 12.06.2012 FR 1255474
(43) Date de publication de la demande: 15.04.2015
(73) Titulaire: Rhodia Operations, 75009 Paris (FR)
(72) Inventeur: CORRIOL, Cécile, F-69003 Lyon (FR)
(74) Mandataire: Chatelan, Florence Anne
(86) Numéro de dépôt international: PCT/EP2013/061718
(87) Numéro de publication internationale: WO 2013/186120

(56) Documents cités:
- WO-A1-2012/076528
- US-A1- 2006 071 359
- US-A1- 2011 237 731
- GOGOLEWSKI ET AL.,: "Annealing of melt-crystallized nylon 6", COLLOID & POLYMER SCIENCE, vol. 260, 1982, pages 859-863,

## Description

La présente invention concerne un procédé comprenant une étape de traitement thermique d'une poudre à base de polyamide afin de diminuer l'écart entre la température initiale de réarrangement cristallin et la température finale de réarrangement cristallin. L'invention concerne également des articles obtenus par l'utilisation de poudres ayant subies ce traitement, en particulier par fusion sélective de couches de poudre de polymères, notamment le prototypage rapide par frittage en phase solide à l'aide d'un laser.

Le procédé de fabrication d'articles par fusion sélective de couches de poudre de polymères est un procédé qui permet d'obtenir des pièces de formes complexes sans outillage et sans usinage, à partir d'une image en trois dimensions de l'article à réaliser, en frittant des couches superposées de poudres polymériques, notamment à l'aide d'un laser. On utilise généralement pour ce faire des polymères thermoplastiques. Des généralités sur le prototypage rapide par frittage laser sont mentionnées dans les brevets US6136948 et les demandes WO96/06881, US20040138363. La technologie d'agglomération de poudres de polyamide sous un rayonnement électromagnétique sert à fabriquer des objets en trois dimensions pour diverses applications, notamment des prototypes et des modèles.

Le document WO 2012/047613 décrit pour sa part un procédé de traitement thermique de poudres de polyarylethercétone ou de polyethercétonecétone. Ce procédé est effectué sur des polymères très spécifiques présentant plusieurs formes cristallines, et surtout plusieurs points de fusion. La différence entre le point de fusion le plus haut et le point de fusion le plus bas étant grande et permettant de nettement distinguer ces deux points de fusion.

Gogolewski et al., Colloid & Polymer Sci. 260, 1982, 859-863 divulgue le traitement thermique de la polyamide 6 ayant une température de fusion T_{f} = 220°C par chauffage à 200°C pendant au moins 10 minutes. Après le chauffage, l'échantillon chauffé s'équilibre thermiquement avec l'ambiance. La fabrication d'article par fusion sélective de couches de poudre n'est pas décrit.

Le document WO 2012/076528 décrit un procédé de fabrication d'articles par fusion sélective de couches de poudre de polymères, notamment le prototypage rapide par frittage en phase solide à l'aide d'un laser d'une poudre à base de copolyamide de type 6 présentant une faible enthalpie de cristallisation froide.

Cependant, malgré les récentes avancées, notamment dans le cas du frittage laser, il n'en reste pas moins souhaitable d'obtenir des poudres qui présentent :
- des caractéristiques intrinsèques améliorées, comme un dimensionnement plus précis, une coulabilité améliorée, et/ou
- des propriétés « extrinsèques », c'est-à-dire qui permettent d'obtenir des articles présentant des propriétés améliorées, par exemple en termes de résistance mécanique, chimique et/ou de vieillissement, que d'aspect, ou encore qui permettent la mise en place de procédé de fabrication plus simples et/ moins couteux en temps, en énergie, en matière et/ou moins onéreux.

Il est particulièrement souhaitable de trouver des poudres qui permettent l'obtention d'articles présentant également des propriétés améliorées, notamment en termes mécaniques, de résistance dans le temps («aging»), de résistance thermique, à la lumière et/ou de résistance chimiques, tout particulièrement permettant des températures d'utilisation élevées, et ayant des propriétés améliorées pour le frittage laser.

La demanderesse vient de découvrir que la diminution de la différence entre la température finale du réarrangement cristallin et la température initiale du réarrangement cristallin, encore appelé Tfr-Tir, est un paramètre influant sur les propriétés des poudres de polyamides, en particulier en vue de leur utilisation lors de la réalisation d'articles par fusion sélective de couches de poudre de (co)polyamides, notamment de type 6 ou 66. Une diminution de cet écart peut permettre d'améliorer les caractéristiques de la poudre, notamment de diminuer, voire d'éviter la présence de fissures et/ou de mottes à la surface du lit de poudres lors de la fabrication d'articles, d'améliorer son aptitude au frittage, et/ou la coulabilité de la poudre, ainsi que d'améliorer l'article obtenu par frittage laser notamment en terme de qualité de surface.

La demanderesse vient de mettre au point un procédé permettant de diminuer la différence entre la température finale de réarrangement cristallin et la température initiale de réarrangement cristallin, symbolisé par l'expression « Tfr-Tir », d'une poudre de (co)polyamide. Ledit procédé peut permettre d'améliorer les propriétés de ladite poudre, notamment lorsque celle-ci est utilisée pour réaliser des articles par fusion sélective de couches de poudre.

Le phénomène de réarrangement cristallin, encore appelée « cristallisation froide », par exemple dans la demande brevet français FR 10 60345, publiée sous le numéro FR2968664, correspond à un processus exothermique issu du réarrangement des zones amorphes du matériau en zones cristallines. Il apparaît à une température inférieure à la température de fusion du polymère. Il peut être mis en évidence par des mesures DSC (Differential Scanning Calorimetry) dans des conditions standards ou modulées. Il correspond à un pic exothermique apparaissant avant le pic endothermique de la fusion. Dans les conditions standards de mesure DSC, l'exotherme du réarrangement cristallin peut être masqué entièrement ou partiellement par d'autres phénomènes, notamment tels que la fusion. La DSC modulée en revanche permet de séparer les phénomènes réversibles des phénomènes non-réversibles par application d'un signal sinusoïdale en température. La DSC modulée permet effectivement de séparer le flux total de chaleur en ses composants thermodynamiques et cinétiques. Le phénomène de réarrangement cristallin apparaît alors en phénomène non-réversible (composant cinétique du signal total) et est alors séparé de la fusion.

Ainsi l'invention a pour objet un procédé de fabrication d'un article façonné par fusion sélective de couches mettant en œuvre une poudre obtenue par un procédé de traitement thermique d'une composition de (co)polyamide, notamment sous forme de poudre, comprenant au moins les étapes suivantes :
- chauffage permettant de porter la composition à une température inférieure à la température de fusion la plus faible, ou Tfmin, et supérieure à la température Tfmin-30°C, pendant au moins 10 minutes,
- refroidissement à température ambiante, c'est-à-dire 25°C,
- récupération de la composition, obtenue, sous forme de poudre,
   ladite composition récupérée présentant une valeur Tfr-Tir diminuée par rapport à la valeur Tfr-Tir initiale, c'est-à-dire avant traitement,
   en particulier ledit (co)polyamide est semi-cristallin,
- fabrication du dit article par fusion sélective de la dite poudre, comme défini par la revendication 1.

Les températures Tir et Tfr sont mesurées par un procédé P de DSC modulé qui consiste à mesurer les Tir et les Tfr par analyse calorimétrique différentielle modulée dans laquelle :
a) la composition, et en particulier le(s) (co)polyamide(s), est maintenu à une température de 25°C pendant 5 minutes,
b) une montée modulée en température est effectuée à une vitesse de 3°C/min jusqu'à 250°C avec une amplitude sinusoïdale de 0,48°C et une période d'1 minute, puis un refroidissement, à une vitesse de 3°C/min jusqu'à 25°C et le signal est enregistré.

Plus particulièrement, le procédé P est tel que décrit ci-dessous, et comprend 4 étapes :
1. Mise en service de l'appareil
   - Appareil utilisé: Q2000, TA instruments.
   - Mettre l'appareil sous tension et laisser équilibrer pendant au moins 30 min.
   - Etalonner l'appareil suivant les recommandations du fabricant de l'appareil.
   - L'azote utilisé est de qualité analytique. Il sera utilisé pour toutes les mesures, conformément aux recommandations du fabricant de l'appareil.
2. Mise de l'échantillon dans le creuset et manipulation des creusets
   - Peser deux creusets avec leur couvercle: un premier creuset dans lequel sera déposé l'échantillon et un deuxième creuset qui servira de référence.
   - Déposer entre 2 et 5g de matière dans le premier creuset. La précision de la pesée doit être de ± 0,1 mg.
   - Fermer les deux creusets avec leur couvercle à l'aide d'une sertisseuse.
   - Vérifier que l'extérieur des deux creusets est propre.
   - Mettre en place les creusets dans les cellules du calorimètre à l'aide des pinces.
   - Fermer le couvercle du porte-échantillon et le couvercle de la cellule contenant la référence.
3. Analyses calorimétrique différentielle modulée ou DSC modulée
   - Paramétrer la modulation de la montée et descente en température:
      - Amplitude sinusoïdale: 0,48°C
      - Période: 1 min
   - Procéder à une première isotherme de 5 minutes à 25°C pour stabiliser la modulation.
   - Procéder à une rampe en températures, à une vitesse de 3°C/min jusqu'à 250 °C.
   - Procéder à un cycle de refroidissement, à une vitesse de 3°C/min jusqu'à 25°C et enregistrer les résultats.
   - Ouvrir le porte-échantillons. Sortir le creuset contenant l'échantillon et vérifier qu'il n'a pas subi de déformation et/ou détérioration. Si tel est le cas, rejeter la mesure et procéder à une deuxième mesure.
4. Détermination de Tir et de Tfr
   Dans le logiciel de traitement des données "TA Universal Analysis 2000":
   - Afficher le pic correspondant à la première montée en températures et aux phénomènes non-réversibles ("non-reversing heat flow"). Le pic exothermique qui apparaît correspond au réarrangement cristallin du matériau.
   - Construire la ligne de base du pic qui relie les deux points au niveau desquels le pic "décolle" de la ligne de base.
   - Mesurer:
      - La température initiale de réarrangement cristallin (Tir)
      - La température finale de réarrangement cristallin (Tfr)

En outre, ce procédé peut permettre de déterminer l'enthalpie de cristallisation froide ΔHcf en joule/gramme qui est donnée directement par le logiciel de traitement des données à partir de l'aire A, ainsi que décrit dans la demande de brevet français dont le numéro de dépôt est le 10 60345.

Lors du chauffage, la composition peut être portée à une température allant de Tfmin-28°C à Tfmin-2°C, notamment allant de Tfmin-25°C à Tfmin-5°C, en particulier de Tfmin-22°C à Tfmin-10°C, voire être d'environ Tfmin-20°C.

En particulier, la composition, notamment sous forme de poudre, n'est pas portée à une température supérieure ou égale à son point de ramollissement, notamment la composition atteint une température maximum égale à la température de ramollissement -2°C. Cette température de ramollissement peut être mesurée par Analyse Mécanique Dynamique (DMA).

Le procédé implique un chauffage permettant de porter la composition à une température inférieure à la température de fusion la plus faible, ou Tfmin, et supérieure à la température Tfmin-30°C, et en particulier à une température telle que définie ci-dessus, pendant au moins 10 minutes. Plus particulièrement la composition est portée à une telle température pendant une durée allant de 10 minutes à 120 minutes, notamment de 10 à 60 minutes, voire de 15 à 45 minutes. Par « la composition est portée à une température inférieure à X et supérieure à Y », on entend que toute la composition atteint et reste à une température dans la gamme, en particulier au cœur de la composition.

Avantageusement, le refroidissement est relativement lent, en particulier il est obtenu par simple arrêt du chauffage.

Selon la présente invention le point de fusion correspond à la température du sommet du pic endothermique déterminé par DSC. En particulier cette température de fusion est mesuré selon le procédé P dans lequel les étapes 1 à 3 sont telles que décrites ci-dessus, et l'étape 4' de détermination de la température de fusion Tf est la suivante :
Dans le logiciel de traitement des données "TA Universal Analysis 2000":
- Afficher le pic correspondant à la première montée en températures et aux phénomènes réversibles ("reversing heat flow"). Le pic endothermique qui apparaît correspond à la fusion du matériau.
- La température correspondant au sommet du pic est la température de fusion du matériau.

Selon une variante le ou les (co)polyamide(s) de la composition présente(nt) un seul point de fusion.

Dans le cas de (co)polyamide(s) présentant plusieurs points de fusion, l'écart de température entre le point de fusion le plus haut et le point de fusion le plus bas peut être inférieur ou égale à 15°C, en particulier inférieur ou égale à 10°C, voire inférieur ou égale à 5°C.

La poudre obtenue par le procédé peut présenter Tfr-Tir diminuée d'au moins 15 %, notamment d'au moins 25 %, voire d'au moins 30 % par rapport à la valeur Tfr-Tir de la composition avant traitement.

Ladite composition peut comprendre une teneur en (co)polyamide allant de 50 à 100% en poids par rapport au poids total de la composition. Plus particulièrement, cette teneur peut aller de 60 à 100% en poids, notamment de 75 à 100% en poids, voire de 90 à 100 % en poids par rapport au poids total de la composition. Selon un mode de réalisation particulier, la composition comprend une teneur en (co)polyamide allant de 95 à 100% en poids par rapport au poids total de la composition.

La composition peut comprendre un ou plusieur(s) (co)polyamide(s). Lorsque la composition comprend plusieurs (co)polyamide, la teneur en l'un de ceux-ci peut être supérieure à 80 % en poids, notamment 90 % en poids par rapport au poids total de la composition.

Selon un mode de réalisation particulier la composition comprend deux, trois ou quatre (co)polyamides.

Dans le cas où au moins deux, et en particulier deux, (co)polyamides sont présents dans la composition, ils peuvent ne pas se présenter sous forme de mélange de polyamide régulé diacide et de polyamide régulé diamine et/ou de copolyamide régulé diacide et de copolyamide régulé diamine, en particulier tel que défini dans le document US20060071359.

Selon un autre mode de réalisation particulier la composition comprend un seul (co)polyamide.

La composition peut encore être uniquement constitué de (co)polyamide, et notamment de 1, 2, 3 ou 4 (co)polyamides, en particulier elle est constitué d'un seul (co)polyamide.

Les polyamides peuvent être choisis dans le groupe comprenant les polyamides obtenus par polycondensation d'au moins un diacide carboxylique aliphatique linéaire avec une diamine aliphatique ou cyclique ou entre au moins un diacide carboxylique aromatique et une diamine aliphatique ou aromatique, les polyamides obtenus par polycondensation d'au moins un aminoacide ou lactame sur lui-même, ou leur mélange et (co)polyamides. Les polyamides semi-cristallins sont particulièrement préférés. Les polyamides linéaires sont également préférés.

La composition comprend une teneur totale de PA11 et de PA12 inférieure ou égale à 10% en poids par rapport au poids total de (co)polyamide présent dans la composition, et tout particulièrement la composition est dépourvue de PA11 et/ou de PA12.

La composition comprend une teneur en copolyamide allant de 50 à 100% en poids, notamment de 60 à 95% en poids par rapport au poids total de polyamide, voire par rapport au poids total de polymère thermoplastique, ou même par rapport au poids total de la composition.

Selon une variante, la composition comprend en tant que polyamide, voire en tant que polymère thermoplastique, uniquement un ou plusieurs copolyamide(s), en particulier tel(s) que décrit(s) dans la présente description.

Selon l'invention, la composition comprend au moins un copolyamide obtenu par polymérisation d'au moins un monomère constitutif du polyamide et au moins un ou plusieurs comonomères. Avantageusement le(s)dit(s) copolyamide(s) sont semi-cristallins.

Ledit monomère constitutif peut être un monomère tel que défini dans les paragraphes précédents. Tout particulièrement il s'agit de caprolactame ou de l'aminoacide correspondant.

Selon l'invention, le copolyamide comprend une teneur en monomère constitutif d'au moins 80 % molaire par rapport au nombre de moles du mélange total de monomères et comonomères du copolyamide.

On entend par comonomère, également appelé comonomère minoritaire, un composé différent du monomère constitutif du polyamide et capable de se lier de manière covalente aux monomères constitutifs du polyamide, notamment par des liaisons amides, esters, ou imides, pour former un copolyamide.

Les comonomères aromatique et/ou cycloaliphatique présentent préférentiellement au moins une fonction choisie dans le groupe constituée par :
- une fonction amine Am, notamment capable de former une liaison amide avec une fonction acide carboxylique du monomère constitutif du polyamide ;
- une fonction acide carboxylique Ac, notamment capable de former une liaison amide avec une fonction amine du monomère constitutif du polyamide ;
- une fonction alcool OH, notamment capable de former une liaison ester avec une fonction acide carboxylique du monomère constitutif du polyamide ; et
- une fonction diacide carboxylique DA, notamment capable de former une liaison imide avec une fonction amine du monomère constitutif du polyamide. Cette fonction diacide carboxylique peut comporter les fonctions acides carboxyliques géminales ou sur des atomes de carbone vicinaux.

La fonction amine Am est préférentiellement une fonction amine primaire ou son sel. La fonction acide carboxylique peut être sous forme salifiée ou non.

D'une manière préférée, le comonomère est représenté par la formule (I) suivante :

**R(Am)w-(Ac)x(OH)y(DA)z** (I)

dans laquelle:
- R est un radical hydrocarboné linéaire, branché, aliphatique, aromatique ou cycloaliphatique comprenant éventuellement de 1 à 20 atomes de carbone et comprenant éventuellement des hétéroatomes tels que N, O, ou P ;
- w est compris entre 0 et 4 ;
- x est compris entre 0 et 4 ;
- y est compris entre 0 et 4 ;
- z est compris entre 0 et 4 ; et
- w+x+y+z est supérieur ou égal à 1, notamment compris entre 1 et 5.

Les comonomères peuvent être choisis dans le groupe constitué par :
- les aminoacides ou acides aminocarboxyliques, par exemple comprenant de 3 à 18 atomes de carbone ; les lactames par exemple comprenant de 3 à 18 atomes de carbone ;
- les diamines pouvant être aliphatiques ou aromatiques ou cycloaliphatiques et comprenant préférentiellement de 3 à 18 atomes de carbone ;
- les diacides pouvant être aliphatiques ou aromatiques ou cycloaliphatiques comprenant préférentiellement de 3 à 18 atomes de carbone ;
- les composés monoacides ou monoamines généralement utilisés comme agent limiteurs de chaines du polyamide ;
- les hydroxyacides ou dérivés, par exemple comprenant préférentiellement de 3 à 18 atomes de carbone ;
- les lactones par exemple comprenant de 3 à 18 atomes de carbone,
- les diols pouvant être aliphatiques ou cycloaliphatiques et comprenant préférentiellement de 3 à 18 atomes de carbone ;
- les monomères comportant deux fonctions acides carboxyliques permettant de former des fonctions imide, aliphatiques ou aromatiques ou cycloaliphatiques et comprenant de 3 à 18 atomes de carbone ;
- ou leurs mélanges.

On peut citer à titre d'exemple comme comonomères aliphatiques ceux choisis dans le groupe constitué par : l'acide amino-11-undécanoïque, l'acide amino-12-dodécanoïque, le lauryllactame, l'acide sébacique, l'acide dodécanedioïque, la tétraméthylène diamine, la triméthylhexaméthylène diamine, l'acide adipique, l'hexaméthylène diamine, l'acide oxalique, l'acide fumarique, l'acide maléique, l'acide méthyle glutarique, l'acide éthyle succinique, la métaxylylène diamine, la paraxylylène diamine, la méthyle-1 pentaméthylène diamine, les acides gras comme l'acide laurique, l'acide stéarique, l'acide palmitique, l'acide benzylique, l'acide 1-naphthylacétique, l'acide 3-(3,5-di-tert-butyl-4-hydroxyphenyl) propionique, la benzylamine, la laurylamine, la 1-naphthaleneméthylamine, l'octanol, le 2-éthyl hexanol, l'éthylène glycol, le 1,2-propane diol, le 1,3-propane diol, le 1-4-butanediol, l'éthanolamine, la propanolamine, l'acide lactique, l'acide glycolique, la caprolactone, la butyrolactone, la propionolactone , l'acide 3-hydroxy butyrique, l'acide 3-Hydroxy valerique, la 2,2,6,6-tétra-(β-carboxyéthyl)cyclohexanone, le diaminopropane - N,N,N',N' acide tétraacétique, l'acide malique, l'acide tartarique, l'acide citrique, l'acide aspartique, l'acide glutamique, et le dipentaerythritol.

Le copolyamide au sens de l'invention comprend ainsi au moins un comonomère, dont au moins un est un comonomère aromatique ou cycloaliphatique. Le copolyamide peut comprendre un mélange d'un comonomère aromatique et d'un comonomère cycloaliphatique.

On entend par comonomère aromatique un comonomère comprenant au moins un cycle aromatique et éventuellement une ou plusieurs chaines hydrocarbonées, linéaires ou ramifiées. Le copolyamide selon l'invention peut comprendre au moins un comonomère minoritaire aromatique, tel que par exemple ceux choisis dans le groupe constitué par : l'acide téréphtalique, l'acide isophtalique, l'acide benzoïque, la phenylène diamine, l'acide 1 naphthoique, l'acide anthracene-9-carboxylique, l'aniline, la naphthylamine, l'acide 1,8-naphthalene dicarboxylique, l'acide 2,6-naphthalenedicarboxylique, l'acide 5-hydroxy isophthalique, l'acide 5-sulfo isophthalique, le 2,3-diaminonaphthalene, le 1,5-diaminonaphthalene, l'acide 4-amino benzoïque, l'acide 4-hydroxybenzoique, l'acide 1-Hydroxy 2-naphthoique, l'acide 3-hydroxy 2-naphthoique, l'acide 4,4'-diamino diphenylméthane, le 4-aminophenyl éther, l'acides trimesique, l'acide trimellitique, l'acide pyrromellitique, l'acide 3,4,9,10-perylenetetracarboxylique, l'acide amino-5 isophthalique, l'acide 3,5-diamino benzoique, l'hydroquinone, le resorcinol, le bisphenol A, le 4,4'-oxydiphénol, et l'anhydride tetrahydrophthalique.

On entend par comonomère cycloaliphatique un comonomère comprenant au moins un cycle aliphatique et éventuellement une ou plusieurs chaines hydrocarbonées, linéaires ou ramifiées. Le copolyamide selon l'invention peut comprendre au moins un comonomère minoritaire cycloaliphatique, tel que par exemple ceux choisis dans le groupe constitué par : l'isophorone diamine, le bis (3,5-dialkyl-4-aminocyclohexyl) methane, le bis(3,5-dialkyl-4-aminocyclohexyl)ethane, le bis (3,5-dialkyl-4-aminocyclo-hexyl) propane, le bis (3,5- dialkyl-4-aminocyclo-hexyl) butane, le bis-(3-méthyl-4-aminocyclohexyl)-méthane, le p-bis (aminocyclohexyl) methane et l'isopropylidenedi (cyclohexylamine), le dicarboxy-1,4 cyclohexane, le 4,4'- diamino- 3,3' dimethyldicyclohexymethane, le 1,4- diaminocyclohexane, l'acide hexahydroterephtalique, la 4-amino-2,2,6,6-tetramethylpiperidine (TAD), la piperazine, la N-(2-aminoethyl) piperazine, la N,N'-bis(2-aminoethyl) piperazine, la 1,2-diamino cyclohexane, N,N'-bis (2-aminoethyl) imidazolidone, la N-(2-hydroxyethyl) piperazine, l'isosorbide, l'isomannide, le 1,4 cyclohexanediol, la N,N'-bis (2-hydroxyethyl) imidazolidone, l'acide 4-amino 1-cyclohexane carboxylique, et l'acide trans-1,2-diaminocyclohexane-N,N,N',N'-tétra acétique.

Le copolyamide peut également être un polymère comprenant de telles chaînes macromoléculaires étoiles, tels que ceux décrits dans les documents FR2743077, FR2779730, US5959069, EP632703, EP682057 et EP832149. Ces composés sont connus pour présenter une fluidité améliorée par rapport à des polyamides linéaires de même masse moléculaire.

On préfère notamment les copolyamides comprenant en tant que comonomères minoritaires un mélange de diamine cycloaliphatique et de diacide aromatique.

A titre d'exemple de copolyamides selon l'invention on peut notamment citer :
- un copolyamide de type 6 comprenant 4,7 % molaire d'un mélange d'acide téréphtalique et d'une diamine, notamment l'isophoronediamine;
- un copolyamide de type 6 comprenant 0,37 % molaire d'un mélange d'acide isophtalique et d'une diamine, notamment l'isophoronediamine;
- un copolyamide de type 6 comprenant 2 % molaire d'un mélange d'acide téréphtalique et d'hexaméthylène diamine;
- un copolyamide de type 6 comprenant 13 % molaire d'un mélange d'acide isophtalique et d'hexaméthylène diamine;
- un copolyamide de type 6 comprenant 5 % molaire d'un mélange d'acide adipique et d'isophoronediamine; et
- un copolyamide de type 6 comprenant 2 % molaire d'un mélange d'acide sébacique et d'isophoronediamine.

Les copolyamides peuvent être fabriqués de manières conventionnelles par polymérisation, notamment continue ou discontinue.

Tout particulièrement, la composition est sous forme de poudre. On entend par poudre un assemblage de particules de polyamide obtenu selon divers procédés possibles. La poudre selon l'invention peut être obtenue de diverses manières connues de l'homme du métier en fonction des matériaux utilisés, tel que par broyage, cryobroyage, par voie de polymérisation, ou par voie précipitation. On peut notamment citer par exemple les documents EP1797141 et WO2007/115977 et WO2010/063691.

Ladite poudre peut notamment être fabriquée par :
a) mélange en fondu d'un (co)polyamide avec un composé A constitué par un matériau polymérique comprenant au moins une partie de sa structure compatible avec ledit copolyamide et au moins une partie de sa structure non compatible et insoluble dans ledit copolyamide, pour obtenir une dispersion de particules discrètes de copolyamide ;
b) refroidir ledit mélange à une température inférieure à la température de ramollissement du copolyamide ; et
c) traiter ledit mélange refroidi pour provoquer le délitement des particules de (co)polyamide.

La formation du mélange est notamment obtenue par fusion du (co)polyamide et addition du composé A sous forme solide ou fondu et application d'une énergie de mélange pour obtenir la formation des particules discrètes de copolyamide dispersées dans une phase avantageusement continue formée par le composé A. Ce mélange peut également être obtenu par mélange à l'état solide de particules dudit (co)polyamide et des particules dudit additif A, et fusion du mélange de particules avec application sur le mélange fondu d'une énergie de mélange pour obtenir la formation de particules discrètes de (co)polyamides dispersées dans une phase avantageusement continue formée par le composé A.

Le mélange peut comprendre une teneur pondérale en (co)polyamide comprise entre 50 et 90 %, en particulier entre 70 et 80 %.

La concentration pondérale en additif A dans le mélange peut être comprise entre 10 % et 50 % avantageusement entre 20 % et 30 %. Nous rappelons que les bornes sont incluses dans les gammes présentées.

Selon un mode de réalisation ladite poudre est constituée de (co)polyamide et d'additif A, ainsi optionnellement que :
- au moins un, en particulier un, composé B tel que défini ci-dessous, et/ou
- un ou plusieurs additifs ou composés tels que définis ci-dessous.

Plus généralement, le mélange peut être obtenu par tout dispositif convenable tel que les mélangeurs à vis sans fin ou à agitateurs compatibles avec les conditions de température et de pression utilisées pour la mise en œuvre des copolyamides. Selon un mode de réalisation préféré de l'invention, le mélange fondu est mis en forme avant l'étape de refroidissement, par exemple sous forme de filaments ou joncs. Cette mise en forme peut être avantageusement réalisée par un procédé d'extrusion à travers une filière. Selon un mode de réalisation préféré de l'invention, notamment quand le mélange fondu est mis en forme, ce mélange fondu est préférentiellement réalisé dans une extrudeuse alimentant la filière d'extrusion.

Le refroidissement du mélange fondu peut être réalisé par tout moyen approprié. Parmi ceux-ci, le refroidissement pneumatique ou le trempage dans un liquide sont préférés.

L'étape de récupération de la poudre de (co)polyamide consiste avantageusement, en un traitement de délitement des particules discrètes de (co)polyamide. Ce délitement peut être obtenu par application d'une force de cisaillement sur le mélange refroidi. Le délitement des particules de (co)polyamide peut être aussi obtenu par trempe du mélange fondu refroidi dans un liquide, non solvant du polymère thermoplastique et avantageusement solvant de l'additif A.

L'additif A est avantageusement, un polymère du type bloc, séquencé, peigne, hyperbranché ou étoile. Ainsi, la structure compatible avec le polyamide forme un bloc, une séquence, le squelette ou les dents du peigne, le cœur ou les branches du polymère étoile ou de l'hyperbranché. Selon un mode de réalisation préféré de l'invention, la structure compatible de l'additif A comprend des fonctions chimiquement identiques à celles du copolyamide. On utilise préférentiellement comme additif A les composés choisis dans le groupe comprenant : les copolymères bloc d'oxyde d'éthylène et d'oxyde de propylène (Pluronic® et Synperonic®), et les polyalkylènes amines (Jeffamine®).

La composition, outre le (co)polyamide et l'additif A, peut comprendre d'autres composés.

L'additif A peut être utilisé en combinaison avec un composé B qui est insoluble et non compatible avec le (co)polyamide. Avantageusement ce composé B présente une structure chimique compatible avec au moins une partie de la structure du composé A, notamment la partie de structure non compatible avec le (co)polyamide. Comme exemple de composés B convenables pour l'invention, on peut citer les composés appartenant aux familles des polysaccharides, polyoxyalkylènegycols, polyoléfines. Le composé B peut être ajouté de manière séparée du composé A ou sous forme de mélange avec au moins une partie du composé A. Il peut également être pré-mélangé avec le polymère thermoplastique.

Ce procédé permet l'obtention de particules à géométrie contrôlée, notamment en ajustant l'agitation lors de l'étape a), la nature des composés A et/ou B, la température et la concentration des différents composants du mélange.

La poudre peut notamment présenter une ou plusieurs des caractéristiques suivantes :
- une distribution granulométrique des particules d50 comprise entre 20 et 100 µm, préférentiellement entre 30 et 70 µm, et répondant également à la relation suivante : (d90-d10)/d50 comprise entre 0,85-1,3, préférentiellement 0,9-1,2 ;
- un facteur de sphéricité compris entre 0,8 et 1, préférentiellement entre 0,85 et 1 ;
- une porosité intra-particulaire inférieure à 0,05 ml/g, préférentiellement inférieure à 0,02 ml/g, notamment pour des tailles de pores supérieures ou égales à 0,01 µm.

La distribution granulométrique des particules d50, le facteur de sphéricité, et la porosité intra-particulaire sont notamment définis dans la demande de brevet WO2010/063691.

Les compositions utilisées selon l'invention, les poudre et/ou les articles obtenus, peuvent contenir un ou plusieurs additifs ou composés choisis dans le groupe comprenant les matifiants, les stabilisants thermiques, les stabilisants lumière, les pigments, les colorants, les charges de renfort, tels que des fibres de verre ou les fibres minérales, les billes de verre et fibres de carbones, les nucléants, et les agents de renfort du choc tels que des élastomères, les divers métaux et les agents anti-mottants tels que la silice.

La présente invention concerne un procédé de fabrication d'un article façonné par fusion sélective de couches, notamment par prototypage rapide utilisant un laser, utilisant une poudre susceptible d'être obtenue ou obtenu par le procédé selon l'invention.

La fabrication par fusion sélective de couches est un procédé de fabrication d'articles consistant à déposer des couches de matériaux sous forme de poudre, à fondre de manière sélective une partie ou un domaine d'une couche, et de venir déposer une nouvelle couche de poudre et de fondre de nouveau une partie de cette couche et ainsi de suite de manière à obtenir l'objet désiré. La sélectivité de la partie de la couche à fondre est obtenue par exemple grâce à l'utilisation d'absorbeurs, d'inhibiteurs, de masques, ou à travers l'apport d'énergie focalisée, comme par exemple un rayonnement électromagnétique tel qu'un rayon laser.

Le frittage par additivation de couches, particulièrement le prototypage rapide par frittage à l'aide d'un laser est tout particulièrement visé.

Le prototypage rapide est un procédé qui permet d'obtenir des pièces de formes complexes sans outillage et sans usinage, à partir d'une image en trois dimensions de l'article à réaliser, en frittant des couches superposées de poudres à l'aide d'un laser. Des généralités sur le prototypage rapide par frittage laser sont mentionnées dans les brevets US6136948 et les demandes WO96/06881, US20040138363.

Les machines permettant la réalisation de ces procédés sont composées d'une chambre de construction sur un piston de fabrication, entourée à gauche et à droite par deux pistons fournissant la poudre, d'un laser, et d'un moyen pour étaler la poudre, tel qu'un rouleau. La chambre est généralement maintenue à une température constante pour éviter les déformations.

A titre d'exemple, la poudre est d'abord étalée en couche uniforme sur toute la chambre, le laser trace alors la section 2D sur la surface de la poudre, la frittant ainsi. Des caches peuvent être également utilisés. Le piston de fabrication descend de l'épaisseur d'une strate tandis qu'un des pistons d'approvisionnement en poudre monte. Une nouvelle couche de poudre est étalée sur toute la surface et le processus se répète jusqu'à ce que la pièce soit terminée. La pièce doit ensuite être retirée précautionneusement de la machine et nettoyée de la poudre non frittée qui l'entoure. Il existe d'autres machines ou la poudre n'arrive pas par le bas grâce à des pistons, mais par le haut. Cette méthode permet de gagner du temps car on n'est alors pas obligé d'arrêter la fabrication des pièces pour réapprovisionner la machine en poudre.

D'autres procédés de fabrication par addition de couches tels que ceux décrits dans les brevets WO 01/38061 et EP1015214 sont aussi appropriés. Ces deux procédés utilisent un chauffage infra rouge pour fondre la poudre. La sélectivité des parties fondues est obtenue dans le cas du premier procédé grâce à l'utilisation d'inhibiteurs, dans le cas du second procédé grâce à l'utilisation d'un masque. Un autre procédé est décrit dans la demande DE10311438. Dans ce procédé, l'énergie pour fondre le polymère est apportée par un générateur de micro-ondes et la sélectivité est obtenue par l'utilisation d'un "suscepteur".

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

Les matières utilisées sont les suivantes:
- Homopolyamide K122, commercialisé par DSM, de viscosité relative 124 cm³/g selon les normes ISO 307, 1157, 1628. Cet homopolyamide 6 présente une enthalpie de cristallisation froide selon le procédé P de 98 J/g. La poudre obtenue présente une distribution D50 de 44,8 µm et une dispersion granulométrique ((D90-D10)/D50) de 1,25.
- Copolyamide de type 6 comprenant 4,7 % molaire d'un mélange de 50 % en poids d'acide téréphtalique et de 50 % en poids d'isophoronediamine ; de viscosité relative 130 mg/L dans l'acide formique. Ce polyamide présente une enthalpie de cristallisation froide selon le procédé P de 58 J/g. La poudre obtenue présente une distribution D50 de 48,5 µm et une dispersion granulométrique ((D90-D10)/D50) de 1,2.

Ces poudres ont été mélangées de façon homogène avec 0,2 % en poids de silice précipitée avant le passage dans la machine de prototypage rapide. Un stabilisateur thermique est ajouté aux joncs lavés lors du procédé de fabrication.

Ainsi, la poudre A est un mélange de poudre d'homopolyamide K122 avec 0,2 % en poids de silice précipitée, et la poudre B est un mélange de poudre de copolyamide de type 6 tel que décrit ci-dessus avec 0,2 % en poids de silice précipitée.

### Protocole de frittage

Les poudres sont frittées sur une machine de type prototypage laser commercialisée par 3DSystems. Les particules sont disposées dans deux bacs adjacents à la surface de travail et chauffées à une température de 150°C. Les particules sont amenées sur la surface de travail à l'aide d'un rouleau en couche de 100-150 microns. La surface de travail est chauffée à une température comprise entre 195 et 210°C. Un laser d'une puissante entre 39 et 46W apporte l'énergie complémentaire nécessaire au frittage des particules.

Une fois la première couche frittée, la surface de travail est abaissée et le rouleau dépose ensuite une deuxième couche de poudre sur la surface de travail et ainsi de suite jusqu'à obtention de l'article final.

### Exemple 1 : Poudre A

Dans un ballon de 100 l, de la poudre d'homopolyamide K122 (5 kg) est introduite, puis celui-ci est fixé sur un évaporateur rotatif. Afin de chasser l'air résiduel, un filet d'azote est introduit, puis le ballon est monté en température à 200°C par un bain d'huile. La température est maintenue à 200°C pendant 30 minutes, puis le bain d'huile est laissé revenir à 30°C. Enfin, la poudre est récupérée.

**Tableau 1**

| | Tir (°C) | Tfr (°C) | Tfr-Tir (°C) |
|---|---|---|---|
| Poudre A sans traitement thermique | 155 | 231 | 76 |
| Poudre A avec traitement thermique | 185 | 229 | 44 |

| | | | |
|---|---|---|---|
| Tir est la température initiale de recristallisation et Tfr est la température finale de recristallisation Les températures Tir et Tfr sont mesurées par le procédé P de DSC modulée. | | | |

La diminution de Tfr-Tir est donc de 42 %. Par ailleurs, des essais de frittage avec la poudre A traitée et avec la poudre A non-traitée montrent notamment une amélioration de la coulabilité à chaud avec la poudre A ayant subie le traitement thermique.

### Exemple 2 : Poudre B

Le protocole de traitement thermique est identique à celui décrit dans l'exemple 1, excepté que de la poudre B (5 kg) est utilisée.

**Tableau 2**

| | Tir (°C) | Tfr (°C) | Tfr-Tir (°C) |
|---|---|---|---|
| Poudre B sans traitement thermique | 155 | 223 | 68 |
| Poudre B avec traitement thermique | 185 | 225 | 40 |

La diminution de Tfr-Tir est donc de 41 % En outre, comme dans l'exemple 1, des essais de frittage avec la poudre B traitée et avec la poudre B non-traitée montrent également une amélioration de la coulabilité à chaud avec la poudre B ayant subie le traitement thermique.

Les exemples 1 et 2 démontrent donc bien que le traitement thermique permet de diminuer la différence entre Tfr et Tir, mais aussi d'améliorer le comportement des poudres, notamment en termes de coulabilité à chaud.

## Revendications

1. Procédé de fabrication d'un article façonné par fusion sélective de couches mettant en œuvre une poudre de (co)polyamide comprenant un procédé de traitement thermique d'une composition de (co)polyamide, notamment sous forme de poudre, comprenant au moins les étapes suivantes :
- chauffage permettant de porter la composition à une température inférieure à la température de fusion la plus faible, ou Tfmin, et supérieure à la température Tfmin-30°C, pendant au moins 10 minutes, en particulier pendant une durée allant de 10 à 120 min,
- refroidissement à température ambiante,
- récupération de la composition, obtenue, sous forme de poudre,
ladite composition récupérée présentant une valeur Tfr-Tir diminuée par rapport à la valeur Tfr-Tir initiale, c'est-à-dire avant traitement, Tfr étant la température finale de réarrangement cristallin et Tir étant la température initiale de réarrangement cristallin,
ledit (co)polyamide étant un polyamide PA 6 ou un copolyamide obtenu par polymérisation d'au moins un monomère constitutif du polyamide de type 6, à savoir caprolactame ou aminoacide correspondant, et au moins un comonomère représenté par la formule (I) suivante :
**R(Am)w-(Ac)x(OH)y(DA)z** (I)
dans laquelle:
- R est un radical hydrocarboné linéaire, branché, aliphatique, aromatique ou cycloaliphatique comprenant éventuellement de 1 à 20 atomes de carbone et comprenant éventuellement des hétéroatomes tels que N, O, ou P;
- w est compris entre 0 et 4 ;
- x est compris entre 0 et 4 ;
- y est compris entre 0 et 4 ;
- z est compris entre 0 et 4 ; et
w+x+y+z est supérieur ou égal à 1, notamment compris entre 1 et 5, ledit copolyamide comprenant une teneur en monomère constitutif du polyamide de type 6 d'au moins 80 % molaire, par rapport au nombre de moles du mélange total de monomères et comonomères du copolymère;
Am est une fonction amine; Ac est une fonction acide carboxylique; et DA est une fonction diacide carboxylique;
- fabrication du dit article par fusion sélective de couches de la dite poudre.

2. Procédé selon la revendication 1, **caractérisé en ce que** lors de l'étape de chauffage, la composition est portée à une température allant de Tfmin-28°C à Tfmin -2°C, notamment allant de Tfmin-25°C à Tfmin -5°C, en particulier de Tfmin-22°C à Tfmin -10°C, voire être d'environ Tfmin-20°C.

3. Procédé selon la revendication 1 ou 2, **caractérisé en ce que** la composition, en particulier sous forme de poudre, n'est pas portée à une température supérieure ou égale à son point de ramollissement, notamment la composition atteint une température maximum égale à la température de ramollissement -2°C.

4. Procédé selon l'une quelconque des revendications 1 à 3, **caractérisé en ce que** les (co)polyamide(s) présentent plusieurs points de fusion avec un écart de température entre le point de fusion le plus haut et le point de fusion le plus bas inférieur ou égale à 15°C, en particulier inférieur ou égale à 10°C, voire inférieur ou égale à 5°C.

5. Procédé selon l'une quelconque des revendications 1 à 4, **caractérisé en ce que** la composition obtenue présente une Tfr-Tir diminuée d'au moins 15 %, notamment d'au moins 25 %, voire d'au moins 30 % par rapport à la valeur Tfr-Tir de la composition avant traitement.

6. Procédé selon l'une quelconque des revendications 1 à 5, **caractérisé en ce que** la composition comprend une teneur en (co)polyamide allant de 50 à 100% en poids par rapport au poids total de la composition, plus particulièrement de 60 à 100% en poids, notamment de 75 à 100% en poids, voire de 90 à 100% en poids par rapport au poids total de la composition.

7. Procédé selon l'une quelconque des revendications 1 à 6, **caractérisé en ce que** la composition comprend en tant que polyamide, voire en tant que polymère thermoplastique, uniquement un ou plusieurs copolyamide(s).

## Patentansprüche

1. Verfahren zur Herstellung eines durch selektives schichtweises Schmelzen unter Verwendung eines (Co)polyamid-Pulvers, das ein Verfahren zur thermischen Behandlung einer (Co)polyamid-Zusammensetzung, insbesondere in Pulverform, umfasst, gebildeten Artikels, umfassend mindestens die folgenden Schritte:
- Erhitzen zum Bringen der Zusammensetzung auf eine Temperatur, die unterhalb der niedrigsten Schmelztemperatur oder Tfmin und oberhalb der Temperatur Tfmin-30 °C liegt, für mindestens 10 Minuten, insbesondere für einen Zeitraum im Bereich von 10 bis 120 Minuten,
- Abkühlen auf Umgebungstemperatur,
- Gewinnen der erhaltenen Zusammensetzung in Pulverform,
wobei die gewonnene Zusammensetzung einen Tfr-Tir-Wert aufweist, der gegenüber dem anfänglichen Tfr-Tir-Wert verringert ist, wobei Tfr die Endtemperatur der Kristallumlagerung ist und Tir die Anfangstemperatur der Kristallumlagerung ist,
wobei es sich bei dem (Co)polyamid um ein PA-6-Polyamid oder ein durch Polymerisation von mindestens einem Aufbaumonomer des Polyamids vom 6-Typ, nämlich Caprolactam oder der entsprechenden Aminosäure, und mindestens einem Comonomer, das durch die nachstehende Formel (I) wiedergegeben wird, erhaltenes Copolyamid handelt:
**R(Am)w-Ac(x) (OH)y(DA)z** (I)
wobei:
- R für einen linearen, verzweigten, aliphatischen, aromatischen oder cycloaliphatischen Kohlenwasserstoffrest, der gegebenenfalls 1 bis 20 Kohlenstoffatome umfasst und gegebenenfalls Heteroatome wie N, O oder P umfasst, steht;
- w zwischen 0 und 4 liegt;
- x zwischen 0 und 4 liegt;
- y zwischen 0 und 4 liegt;
- z zwischen 0 und 4 liegt und
- w + x + y + z größer oder gleich 1 ist und insbesondere zwischen 1 und 5 liegt,
wobei das Copolyamid einen Gehalt an Aufbaumonomer des Polyamids vom 6-Typ von mindestens 80 Mol-%, bezogen auf die Zahl der Mole der gesamten Mischung von Monomeren und Comonomeren des Copolymers, aufweist;
Am für eine Aminfunktion steht; Ac für eine Carbonsäurefunktion steht und DA für eine Dicarbonsäurefunktion steht;
- Herstellen des Artikels durch selektives schichtweises Schmelzen des Pulvers.

2. Verfahren nach Anspruch 1, **dadurch gekennzeichnet, dass** die Zusammensetzung während des Erhitzungsschritts auf eine Temperatur im Bereich von Tfmin-28 °C bis Tfmin-2 °C, insbesondere im Bereich von Tfmin-25 °C bis Tfmin-5 °C, im Besonderen im Bereich von Tfmin-22 °C bis Tfmin-10 °C oder sogar von ungefähr Tfmin-20 °C gebracht wird.

3. Verfahren nach Anspruch 1 oder 2, **dadurch gekennzeichnet, dass** die Zusammensetzung, insbesondere in Pulverform, nicht auf eine Temperatur gebracht wird, die größer oder gleich ihrem Erweichungspunkt ist und die Zusammensetzung insbesondere eine Maximaltemperatur, die gleich der Erweichungstemperatur -2 °C ist, erreicht.

4. Verfahren nach einem der Ansprüche 1 bis 3, **dadurch gekennzeichnet, dass** die (Co)polyamide mehrere Schmelzpunkte mit einer Temperaturdifferenz zwischen dem höchsten Schmelzpunkt und dem niedrigsten Schmelzpunkt kleiner oder gleich 15 °C, insbesondere kleiner oder gleich 10 °C oder sogar kleiner oder gleich 5 °C aufweisen.

5. Verfahren nach einem der Ansprüche 1 bis 4, **dadurch gekennzeichnet, dass** die erhaltene Zusammensetzung einen Tfr-Tir-Wert aufweist, der um mindestens 15 %, insbesondere mindestens 25 % oder sogar mindestens 30 % gegenüber dem Tfr-Tir-Wert der Zusammensetzung vor der Behandlung verringert ist.

6. Verfahren nach einem der Ansprüche 1 bis 5, **dadurch gekennzeichnet, dass** die Zusammensetzung einen Gehalt an (Co)polyamid im Bereich von 50 bis 100 Gew.-%, bezogen auf das Gesamtgewicht der Zusammensetzung, spezieller 60 bis 100 Gew.-%, insbesondere 75 bis 100 Gew.-% oder sogar 90 bis 100 Gew.-%, bezogen auf das Gesamtgewicht der Zusammensetzung, aufweist.

7. Verfahren nach einem der Ansprüche 1 bis 6, **dadurch gekennzeichnet, dass** die Zusammensetzung als Polyamid oder sogar als thermoplastisches Polymer nur ein oder mehrere (Co)polyamid(e) umfasst.

## Claims

1. Process for manufacturing an article fashioned by selective melting of layers using a (co)polyamide powder comprising a process for the heat treatment of a (co)polyamide composition, especially in powder form, comprising at least the following steps:
- heating to bring the composition to a temperature below the lowest melting point, or Tfmin, and above the temperature Tfmin-30°C, for at least 10 minutes, in particular for a time ranging from 10 to 120 min,
- cooling to room temperature,
- recovering the composition, obtained especially in powder form,
said recovered composition having a value Tfr-Tir that is decreased relative to the initial value Tfr-Tir, i.e. before treatment, Tfr being the final crystalline rearrangement temperature and Tir being the initial crystalline rearrangement temperature,
said (co)polyamide being a PA6 polyamide or a copolyamide obtained by polymerization of at least one constituent monomer of the polyamide of type 6, namely corresponding amino acid or caprolactam, and at least one comonomer represented by formula (I) below:
**R(Am)w-(Ac)x(OH)y(DA)z** (I)
in which:
- R is a linear, branched, aliphatic, aromatic or cycloaliphatic hydrocarbon-based radical optionally comprising from 1 to 20 carbon atoms and optionally comprising heteroatoms such as N, O or P;
- w is between 0 and 4;
- x is between 0 and 4;
- y is between 0 and 4;
- z is between 0 and 4; and
- w+x+y+z is greater than or equal to 1, especially between 1 and 5,
said copolyamide comprising a content of constituent monomer of the polyamide of type 6 of at least 80mol%, relative to the number of moles of the total mixture of monomers and comonomers of the copolymer; Am is an amine function; Ac is a carboxylic acid function; and DA is a dicarboxylic acid function;
- manufacturing said article by selective melting of layers of said powder.

2. Process according to Claim 1, **characterized in that**, during the heating step, the composition is brought to a temperature ranging from Tfmin-28°C to Tfmin - 2°C, especially ranging from Tfmin-25°C to Tfmin - 5°C, in particular from Tfmin-22°C to Tfmin -10°C, or even about Tfmin-20°C.

3. Process according to Claim 1 or 2, **characterized in that** the composition, in particular in powder form, is not brought to a temperature above or equal to its softening point, and the composition especially reaches a maximum temperature equal to the softening point -2°C.

4. Process according to any one of Claims 1 to 3, **characterized in that** the (co)polyamide(s) have several melting points with a temperature difference between the highest melting point and the lowest melting point of less than or equal to 15°C, in particular less than or equal to 10°C, or even less than or equal to 5°C.

5. Process according to any one of Claims 1 to 4, **characterized in that** the composition obtained has a Tfr-Tir decreased by at least 15%, especially by at least 25%, or even by at least 30% relative to the value Tfr-Tir of the composition before treatment.

6. Process according to any one of Claims 1 to 5, **characterized in that** the composition comprises a content of (co)polyamide ranging from 50% to 100% by weight, relative to the total weight of the composition, more particularly from 60% to 100% by weight, especially from 75% to 100% by weight, or even from 90% to 100% by weight relative to the total weight of the composition.

7. Process according to any one of Claims 1 to 6, **characterized in that** the composition comprises as polyamide, or even as thermoplastic polymer, only one or more copolyamides.
